# EUROPEAN PATENT APPLICATION

(11) **EP 2 305 410 A2**
(43) Date of publication of application: **06.04.2011**
(21) Application number: 10171204.0
(22) Date of filing: 29.07.2010
(51) Int. Cl.: B23H 3/04, B23H 3/06, B23H 9/00

(54) **Amorphous metallic material elements and methods for processing same**

(30) Priority: 30.09.2009 US 570818
(71) Applicant: General Electric Company, Schenectady, NY 12345 (US)
(72) Inventor: Trimmer, Andrew Lee, Niskayuna, NY , New York 12309 (US); IORIO, Luana Emiliana, Niskayuna, NY, New York 12309 (US); SUBRAMANIAN, Pazhayannur Ramanathan, Niskayuna, NY, New York 12309 (US); JOHNSON, Francis, Niskayuna, NY, New York 12309 (US)
(74) Representative: Szary, Anne Catherine

(57) **Abstract**

A method for altering a dimension of an element made of an amorphous metallic material is provided. The method includes providing an anode comprising the amorphous metallic material, wherein the amorphous metallic material comprises at least two primary constituents, providing a cathode disposed in a spaced-apart relationship with the anode, providing an electrolyte in contact with the anode and the cathode, and applying an electrical potential between the anode and the cathode.

## Description

### BACKGROUND

The invention relates generally to amorphous metallic materials, and particularly to methods for altering a dimension of amorphous metallic materials.

Generally, amorphous metallic materials exhibit high permeability and ease of magnetization. Typically, cores for electric devices such as transformers, inductors or motors are formed by amorphous metallic materials that are arranged to form a stack or a coil. These stacks or coils are then cut into desired shapes to be employed in the core.

Conventional amorphous metallic materials are formed by rapid solidification of an alloy, that is, by cooling the alloy to a temperature below the glass transition temperature before appreciable nucleation and crystallization has occurred. Melt spinning is typically employed to fabricate metal ribbons or tapes that have some ductility.

Amorphous metallic materials generally are prepared with small dimensions due to the need to extract heat at a sufficient rate to suppress crystallization. However, the currently employed processes, such as melt spinning, often are subject to process limitations that prevent producing articles with desired dimensions. For example, amorphous metallic material ribbons produced by employing melt spinning have thickness values higher than desired for certain high frequency applications. Metallic glass ribbons with reduced thicknesses are useful for achieving lower core loss properties due to a reduction in the eddy current losses which are proportional to the metallic glass ribbon cross-sectional area.

Therefore, there is a need for providing a method for altering a dimension of an element made of amorphous metallic materials.

### BRIEF DESCRIPTION

One embodiment of the present invention provides a method for altering a dimension of an element made of an amorphous metallic material. The method includes providing an anode comprising the amorphous metallic material, wherein the amorphous metallic material comprises at least two primary constituents, providing a cathode disposed in a spaced-apart relationship with the anode, providing an electrolyte in contact with the anode and the cathode, and applying an electrical potential between the anode and the cathode.

Another embodiment of the present invention provides a method for altering a dimension of an element made of an amorphous metallic material. The method includes providing an anode feedstock comprising the amorphous metallic material, wherein the amorphous metallic material comprises at least two primary constituents, providing a cathode; providing an electrolyte in contact with a portion of the anode feedstock and the cathode, wherein the portion of the anode feedstock and the cathode are disposed in a spaced-apart relationship, applying an electrical potential between cathode and the portion of the anode feedstock that is disposed in the electrolyte, and continuously feeding the anode feedstock into the electrolyte.

Yet another embodiment of the present invention provides a method for uniformly reducing a thickness of a metallic glass ribbon. The method includes providing the metallic glass ribbon as an anode feedstock, disposing the metallic glass ribbon in an electrolyte bath, wherein the electrolyte bath comprises phosphoric acid; providing a cathode in a spaced-apart relationship with the metallic glass ribbon, and applying an electrical potential between the metallic glass ribbon and the cathode to remove at least a part of the two primary constituents from the metallic glass ribbon.

### DRAWINGS

These and other features, aspects, and advantages of the present invention will become better understood when the following detailed description is read with reference to the accompanying drawings in which like characters represent like parts throughout the drawings, wherein:

FIG. 1 is a flow chart illustrating an example of various steps involved in the method for altering a dimension of an element made of an amorphous metallic material; and

FIG. 2 is a schematic representation of a system for continuous process for altering a dimension of a metallic glass ribbon.

### DETAILED DESCRIPTION

Embodiments of the present invention include methods for altering a dimension of an element made of an amorphous metallic material. As used herein, the term "amorphous metallic material" refers to a magnetic material where a continuous matrix phase has an amorphous nature, i.e. a disordered atomic-scale structure that does not have long-range crystallographic order. The amorphous metallic material may also include crystalline phases within the amorphous matrix. In certain embodiments, the amorphous metallic material is a metallic glass ribbon that exhibits soft magnetic properties. The method is based on the principle of electrochemical machining (ECM). ECM uses electrical potential energy to drive chemical reactions that remove material from a workpiece (anode). Typically in ECM, an electrolytic cell is created in an electrolyte medium, with a cathode (tool) and an anode (workpiece).

Generally, amorphous metallic materials are not easy to machine or work into desired shapes. Conventional machining may induce defects or stresses that degrade the magnetic properties of the material. For this reason, the methods of fabricating these materials, such as melt spinning, for example, are often relied upon to produce the articles of desired shapes, with little or no mechanical post-processing. However, due to process limitations, it may not be often feasible to produce directly the element with desired shape and dimensions.

Conventionally, the ECM process is employed to form intricate parts from otherwise strong, generally crystalline, metals. However, the application of ECM to amorphous metallic materials requires special considerations to achieve proper results. In embodiments of the present invention, employing the ECM process includes carefully selecting an electrolyte that ensures none or very limited structural damage to the anode. The electrolyte is selected such that the component materials of the anode have substantially similar removal rates in the presence of the selected electrolyte solution, to avoid deleterious alteration of the anode composition and properties. In certain embodiments, the method enables the amorphous metallic material to retain its magnetic properties while altering the material shape and dimensions.

In certain embodiments, the method includes providing an anode, which comprises the amorphous metallic material. The amorphous metallic material of the anode includes at least two primary constituents. The two primary constituents are capable of being oxidized during the process. A cathode is disposed in a spaced-apart relationship with the anode. Both the anode and cathode are in contact with an electrolyte. An electrical potential is applied for a period of time between the anode and the cathode via the electrolyte. In certain embodiments, a high-amperage, low-voltage current is employed to dissolve the two primary constituents from the anode into the electrolyte. In one embodiment, the current may be a pulsed current. Upon application of the voltage, at least a portion of the two primary constituents in the anode are oxidized. The constituents that are oxidized are primarily from the surface of the anode; the oxidized constituents (metal ions) may form hydroxides that are dissolved or otherwise entrained in the electrolyte.

The metal hydroxides in the electrolyte form undesired/unwanted sludge in the electrolyte. In certain embodiments, the sludge containing the hydroxides may be removed from the electrolyte by centrifugal separation. Both the electrolyte and the sludge may be recycled and regenerated. Regeneration of the electrolyte is particularly useful when employing a continuous processes. Non-limiting examples of regeneration of the electrolyte may include filtration, reverse plating, and chemical monitoring where "make-up" fresh electrolyte is used to keep electrolyte conductivity within certain process boundaries. In certain embodiments, filtration and periodic addition of fresh solution is used for regeneration of the electrolyte. Filtration may use a porous media. In one example, the filter may be a bag or a tube that retains and removes the precipitated hydroxides. In one embodiment, the anode and the cathode may be disposed in a flowing electrolyte solution, such that the flowing electrolyte solution washes the metal ions away from the anode. The flowing electrolyte solution may be periodically recycled and regenerated.

In some embodiments, the methods of the present invention may be employed to uniformly reduce a thickness of the anode. As used herein, the term "uniformly" means that the reduction in thickness at any given portion is within 5 percent deviation throughout the surface of the element that is undergoing reduction in thickness. In these embodiments, the distance between anode and cathode is substantially the same throughout the body of the anode and cathode. In one example, the thickness of the anode may be reduced from about 30 microns to about 10 microns.

In other embodiments, a dimension of the element may be altered non-uniformly. For example, the intentional non-uniform reduction in thickness may be to provide a desired shape to at least a portion of the anode. In these embodiments, the distance between the anode and cathode may be varied for different portions of the anode and cathode. Because of the electrical resistance of the electrolyte, for a given electrode geometry the current density is typically the highest at the position where the distance between the anode and cathode is the smallest. As a result the corresponding area of the anode closest to the cathode may dissolve at the highest rate. That is, the different distances result in different removal rates of the material from the anode, thereby resulting in different amounts of reduction in thickness at the different portions of the anode. Accordingly, different shapes, contours, angles, edges, cavities, and the like may be formed in the element by employing the present technique.

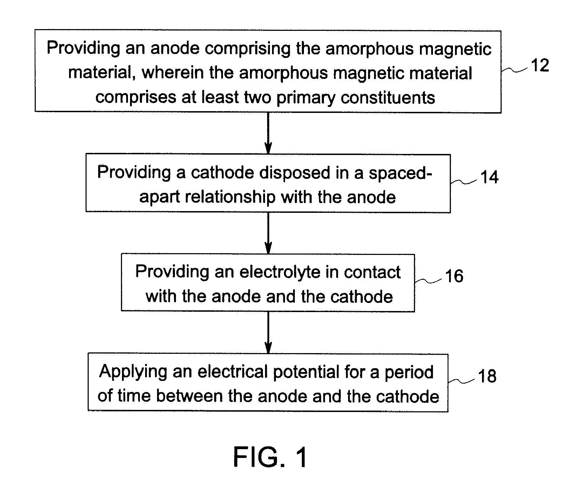

As illustrated in the flow chart of FIG. 1, the method commences by providing an anode comprising the amorphous metallic material. The amorphous metallic material comprises at least two primary constituents (block 12). In one embodiment, at least one of the primary constituents includes ferromagnetic constituents. In this embodiment, at least one other of the primary constituents comprises a glass-forming element. The ferromagnetic constituent is selected from the group consisting of iron, cobalt, and nickel. The glass-forming element may be one or more of boron, silicon, carbon, phosphorous, germanium, zirconium, niobium, or molybdenum. In one example, the amorphous metallic material may include iron and cobalt as the ferromagnetic constituent. In another example, the amorphous metallic material may include iron as the ferromagnetic constituent, and boron, silicon and niobium as the glass-forming element. In another example, the amorphous metallic material may include iron and cobalt as the ferromagnetic constituent and boron, silicon, phosphorous, carbon and molybdenum as the glass-forming constituent. Suitable examples of amorphous metallic materials may include commercially available products from Hitachi including: METGLAS 2605SC, METGLAS 2605S-3A, METGLAS 2705M, METGLAS 2826MB, METGLAS 2605CO, and FINEMET.

At block 14, a cathode is disposed in a spaced-apart relationship with the anode. Non-limiting examples of the cathode material may include copper, copper-tungsten, brass, stainless steel, titanium, gold, platinum, graphite and the like. The distance between the cathode and anode is relatively small. Initially, the distance between the cathode and the anode may be just a few millimeters. For example, the distance between the cathode and the anode before the commencement of the process may be in a range from about 1 millimeter to about 3 millimeters.

In one embodiment, the space between the cathode and the anode may be kept substantially constant during the process. As used herein, the term "substantially constant" is defined as falling within industry recognized manufacturing tolerances, and ordinary and anticipated dimensional variations in the process and may encompass variations in a range from about -5 percent to about + 5 percent. In this embodiment, the anode or the cathode may be moved with respect to each other to maintain the constant distance as the dimension of the anode is altered during the process. For example, the cathode may be gradually moved towards the anode as the thickness of the anode is gradually reduced during the process. The speed with which the anode or the cathode is moved may depend on the rate of removal of the material form the surface of the anode. In one example, as the machining proceeds, the simultaneous movement of the cathode may be set at about 0.02 millimeter/second toward the anode. In one embodiment, the distance between the anode and cathode may be maintained at about 0.4 millimeters throughout the process.

In another embodiment, the distance between the cathode and the anode may vary during the process. For example, if the position of the cathode and the anode is fixed, the alteration in the dimension of the element may result in the increase in space between the anode and the cathode. In one example, the distance between the anode and the cathode may increase with the reduction in thickness of the anode. In one embodiment, the distance between the anode and the cathode before the commencement of the process is in a range from about 1 millimeter to about 1.5 millimeters.

At block 16, an electrolyte is provided in contact with the anode and the cathode. Typically, neutral salts are preferred as electrolytes for conventional ECM process. However, in embodiments of the present invention, an aqueous-based acidic electrolyte is employed to dissolve the at least two primary constituents from the anode. In certain embodiments, a pH of the electrolyte is in a range from about 2 to about 6, in particular embodiments; the pH is in a range from about 2 to about 4. In one embodiment, the electrolyte may be an aqueous solution of phosphoric acid. In one example, the electrolyte comprises about 70 percent by weight to about 90 percent by weight phosphoric acid in an aqueous solution.

The electrolyte is selected such that the electrolyte achieves acceptable levels of anode material removal without undue damage to cathode materials. An electrolyte having a high amount of phosphoric acid (for example, 85 percent by weight and higher) is required to be handled safely due to the toxicity of such an electrolyte. Also, the electrolyte is desirably able to maintain certain significant characteristics, such as its composition and pH value, during the machining period. The electrolyte has substantially similar etch rates for the primary constituents of the amorphous metallic material. In addition to the electrolyte composition, the rate of removal of the at least two primary constituents may depend on the atomic weight and the ionic charge of the two primary constituents, the amount of current which is passed through the anode, and the time for which the current passes. The substantially similar etch rates for the two primary constituents facilitate alteration in the dimension of the anode while preventing formation of pin holes, or any such structural defects in the anode; in addition, the similar removal rate provides for material removal without substantially altering the composition and properties of the remaining anode material.

The anions in the electrolyte are typically selected to avoid or minimize passive film formation on the surface of the anode during the dissolution process. However, it should be noted that obtaining a product having a very thin oxide layer may be desirable for certain applications. In such cases, process conditions may be manipulated to leave a passive oxide layer on the surface of the anode at the end of the process. In addition, the cations in the electrolyte should not deposit on the cathode surface so that the cathode shape remains unchanged.

In one embodiment, the electrolyte may have a forward flow, a reverse flow, or a side flow. Forward flow has the electrode and electrolyte moving in the same direction. Reverse flow has the electrode and electrolyte moving in opposite directions. The reverse flow can be counter current. Side flow has the electrolyte flowing perpendicular to the direction of electrode movement. The selection of the flow method may be based on the shape of the anode. Typically, forward and reverse flows are employed to drill holes or forming cavities, whereas the side flow method is often used for non-cavity shaping, such as profile formation, thickness reduction. It is desirable to have the electrolyte flow uniformly over the entire surface of the anode undergoing alteration in dimension.

In certain embodiments, the electrolyte is pumped through the interelectrode gap so that the products of the electrolysis are carried away. The forced movement of the electrolyte also diminishes the effects both of electrical heating of the electrolyte (resulting from the passage of current) and formation of hydrogen gas; these two effects respectively increase and decrease the effective conductivity of the electrolyte. The electrolyte carries away heat generated by the process, thus maintaining a constant temperature in the region in and around the electrodes. Moreover, the flow of the electrolyte enables removal of the debris of the electrochemical reactions from the gap between the anode and the cathode.

At block 18, an electrical potential is applied for a period of time between the anode and the cathode. The electrical potential drives the electrochemical reaction between the anode and the cathode as a result of which at least two primary constituents of the anode are oxidized at the anode and dissolve in the electrolyte solution. The dissolution of the two primary constituents in the electrolyte results in alteration of the dimension of the anode. For example, the dissolution of the two primary constituents in the electrolyte results in reduction in thickness of the anode. In one embodiment, the potential applied may be in a range from about 2 volts to about 5 volts. The period of time for applying the potential may depend upon the amount of alteration in the dimension desirable at the anode. The period of time may be in a range from about 2 minutes to about 60 minutes. In one embodiment, the period of time may be about 30 minutes. The value of the applied potential may depend on the chemical composition of the anode. For example, for a chemical composition in weight percent of Fe 62.4 percent, Co 15.6 percent, Mo 1 percent, P 10 percent, B 3 percent, C 7 percent, and Si 1 percent, the applied potential is about 4V.

The electrical current for the process may be in a range from about 50 mA to about 10 A. Generally, under processing conditions where current is attributable mostly to the dissolution of metal, a higher current density results in a faster material removal rate. The current may be a DC current. The current may be a pulsed current. In one example, periodic application and removal of potential may provide a short pulse of anode dissolution. The short pulse of anode dissolution may be followed by a short interval where no reaction is occurring prior to the next pulse of anode dissolution.

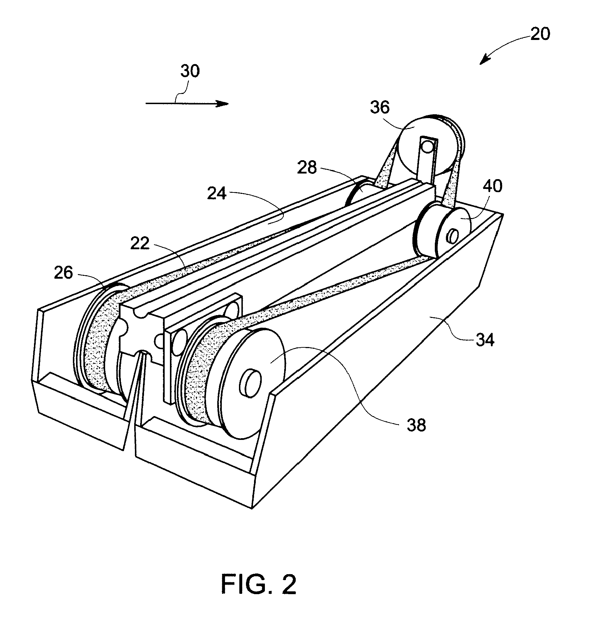

FIG. 2 illustrates an arrangement 20 for a continuous process for altering a dimension of a metallic glass ribbon. As used herein, the term "ribbon" means a slender body of substantially rectangular cross section whose transverse dimensions are much smaller than the length. The metallic glass ribbon is typically fabricated by a melt-spinning process. In the illustrated embodiment, the metallic glass ribbon 22 runs along the electrolyte bath 24 over the spools 26 and 28. The electrolyte has a forward flow as illustrated by the reference numeral 30.

The metallic glass ribbon 22 may run in the electrolyte bath 24 at a constant speed. The speed of the metallic glass ribbon 22 is such that a given portion of the metallic glass ribbon 22 is placed in the electrolyte bath 24 for a determined period of time to enable a required amount of dissolution of the material from the anode in the electrolyte bath 24.

A cathode (not shown) is disposed at the bottom 32 of the electrolyte bath 24. The cathode (not shown) may run along the length of the electrolyte bath 24 and be in the form of a strip that may cover at least a portion of the bottom across the width of the electrolyte bath 24.

Optionally, after passing through the electrolyte bath 24, the metallic glass ribbon 22 may be rinsed in a de-ionized (DI) water bath 34. In the illustrated embodiment, the DI water bath 34 is disposed adjacent to the electrolyte bath 24. A spool 36 is employed to transfer the metallic glass ribbon 32 from the electrolyte bath 24 to the DI water bath 34. In the DI water bath 34, the metallic glass ribbon runs on the spools 38 and 40. The DI water may be periodically replaced or replenished.

In addition, a filter may be in operative association with the electrolyte bath 24, such that the electrolyte bath 24 may be periodically filtered to remove at least a part of the sludge. The filtered electrolyte 24 may be pumped back in the electrolyte bath 24 by employing a pump. The electrolyte may also be subjected to precipitation prior to being filtered. The precipitation may be carried out to reduce the amount of metal sludge from the electrolyte by precipitating the metal hydroxides. An electrolyte reservoir may be coupled to the system to pump in fresh (non-contaminated) electrolyte periodically.

Although not illustrated, in a simpler arrangement requiring more space, the DI water bath 34 may be in a straight-line configuration with the electrolyte bath 24.

In certain embodiments, the amorphous metallic material element processed in accordance with the above method is employed in an electrical device such as a core used in a transformer, inductor or motor. To obtain optimum magnetic properties in magnetic cores made from metallic glass ribbons, toroidal cores are first wound in their final configuration and then annealed, often with a magnetic field applied. This anneal serves to relieve stresses in the metallic glass ribbons resulting both from the rapid quench during melt-spinning of the ribbons and from bending stresses in the metallic glass ribbons due to the curvature of the ribbon in the toroidal core.

Other applications for the amorphous metallic material element of the present technique may include power transformers, common mode chokes, magnetic amplifiers, high precision current transformers for electronic energy meters, ISDN-transformer, sensors, such as fluxgate magnetometer, stress sensor, security sensor.

### Examples

The effects of four different electrolyte compositions were studied for dissolution of a metallic glass ribbon. The nominal chemical composition of the metallic glass ribbon in weight percent was Fe 62.4 percent, Co 15.6 percent, Mo 1 percent, P 10 percent, B 3 percent, C 7 percent, and Si 1 percent. The metallic glass ribbon was fabricated using melt spinning equipment. The thickness of the ribbon was about 23 microns.

The ribbon was cut into four pieces and, after being rinsed with deionized water, each piece was separately immersed in four different types of electrolyte baths. The cathode was made of oxygen free copper. The cathode was approximately 5 times larger in area than the area of ribbon exposed in the electrolyte solution. The first electrolyte bath was a 10 percent aqueous solution of sodium nitrate. The second electrolyte bath was 1 M sulfuric acid. The third electrolyte bath was a mixture of hydrofluoric, nitric, and hydrochloric acids. The fourth electrolyte bath was an aqueous solution of 85 weight percent phosphoric acid. The ribbons were immersed for a period of 10 minutes. An electric potential of 4 Volts was applied across the electrolyte baths.

The ribbons in the first, second and third electrolyte baths were oxidized on the surface or throughout the entire cross-section. This oxidation was undesirable for usage as magnetic cores. The ribbon in the fourth electrolyte bath using aqueous solution of phophoric acid did not result in any surface oxide, and provided a good surface fmish (by substantially avoiding formation of pin holes) and a uniformly reduced thickness of about 10 microns.

### Example 2

Commercially available metallic glass ribbons from Hitachi including METGLAS 2605SC, METGLAS 2605S-3A, METGLAS 2705M, METGLAS 2826MB, and METGLAS 2605CO were subjected to 85 percent phosphoric acid solution. Each ribbon sample was subjected to 4 volts applied potential for 10 minutes immersed in 85 percent phosphoric acid. All the samples were successfully etched using the method of the present application. The samples did not display any adverse effects with respect to the magnetic properties.

For completeness, various aspects of the invention are now set out in the following numbered clauses:
1. A method for altering a dimension of an element made of an amorphous metallic material, comprising:
   providing an anode comprising the amorphous metallic material, wherein the amorphous metallic material comprises at least two primary constituents;
   providing a cathode disposed in a spaced-apart relationship with the anode;
   providing an electrolyte in contact with the anode and the cathode; and
   applying an electrical potential between the anode and the cathode.
2. The method of clause 1, wherein at least one of the primary consitituents comprises a ferromagnetic constituent.
3. The method of clause 2, wherein at least one other of the primary constituents comprises a glass-forming element.
4. The method of clause 2, wherein the ferromagnetic constituent is selected from the group consisting of iron, cobalt, and nickel.
5. The method of clause 2, wherein the ferromagnetic constituent comprises iron and cobalt.
6.The method of clause 1, wherein at least one of the primary constituents comprises a glass-forming element.
7. The method of clause 6, wherein the glass-forming element comprises boron, silicon, carbon, phosphorous, germanium, zirconium, niobium, or molybdenum.
8. The method of clause 1, wherein the cathode comprises copper.
9. The method of clause 1, wherein the electrolyte comprises an acid.
10. The method of clause 9, wherein the a pH of the electrolyte is in a range from about 2 to about 4.
11. The method of clause 9, wherein the electrolyte comprises an aqueous solution.
12. The method of clause 9, wherein the electrolyte comprises phosphoric acid.
13. The method of clause 9, wherein the electrolyte comprises about 70 percent by weight to about 90 percent by weight phosphoric acid in an aqueous solution.
14. The method of clause 1, wherein the potential is in a range from about 2 volts to about 5 volts.
15. The method of clause 1, wherein the electrolyte has substantially similar etch rates for the two primary consituents of the amorphous metallic material.
16. The method of clause 1, further comprising maintaining a substantially constant distance between the anode and cathode.
17. The method of clause 1, wherein the anode comprises a metallic glass ribbon.
18. A method for altering a dimension of an element made of an amorphous metallic material, comprising:
   providing an anode feedstock comprising the amorphous metallic material, wherein
   the amorphous metallic material comprises at least two primary constituents;
   providing a cathode;
   providing an electrolyte in contact with a portion of the anode feedstock and the cathode, wherein the portion of the anode feedstock and the cathode are disposed in a spaced-apart relationship;
   applying an electrical potential between cathode and the portion of the anode feedstock that is disposed in the electrolyte; and
   continuously feeding the anode feedstock into the electrolyte.
19. The method of clause 18, wherein the anode feedstock is provided on a roll.
20. The method of clause 18, further comprising, rinsing at least a portion of the thinned anode feedstock with de-ionized water.
21. The method of clause 18, wherein the anode feedstock comprises a metallic glass ribbon.
22. A method for uniformly reducing a thickness of a metallic glass ribbon, the method comprising:
   providing the metallic glass ribbon as an anode feedstock;
   disposing the metallic glass ribbon in an electrolyte bath, wherein the electrolyte bath comprises phosphoric acid;
   providing a cathode in a spaced-apart relationship with the metallic glass ribbon; and applying an electrical potential between the metallic glass ribbon and the cathode to remove at least a part of the two primary constituents from the metallic glass ribbon.

## Claims

1. A method for altering a dimension of an element made of an amorphous metallic material, comprising:
providing an anode comprising the amorphous metallic material, wherein the amorphous metallic material comprises at least two primary constituents;
providing a cathode disposed in a spaced-apart relationship with the anode;
providing an electrolyte in contact with the anode and the cathode; and
applying an electrical potential between the anode and the cathode.

2. The method of claim 1, wherein at least one of the primary consitituents comprises a ferromagnetic constituent.

3. The method of claim 2, wherein at least one other of the primary constituents comprises a glass-forming element.

4. The method of claim 2, wherein the ferromagnetic constituent is selected from the group consisting of iron, cobalt, nickel and combinations thereof

5. The method of any one of claims 2 to 4, wherein the ferromagnetic constituent comprises iron and cobalt.

6. The method of any preceding claim, wherein at least one of the primary constituents comprises a glass-forming element.

7. The method of claim 6, wherein the glass-forming element comprises boron, silicon, carbon, phosphorous, germanium, zirconium, niobium, or molybdenum.

8. The method of any preceding claim, wherein the cathode comprises copper.

9. The method of any preceding claim, wherein the electrolyte comprises an acid.

10. The method of claim 9, wherein the pH of the electrolyte is in a range from about 2 to about 4.

11. The method of claim 9 or claim 10, wherein the electrolyte comprises about 70 percent by weight to about 90 percent by weight phosphoric acid in an aqueous solution.

12. The method of any preceding claim, wherein the anode comprises a metallic glass ribbon.

13. A method for altering a dimension of an element made of an amorphous metallic material, comprising:
providing an anode feedstock comprising the amorphous metallic material, wherein
the amorphous metallic material comprises at least two primary constituents;
providing a cathode;
providing an electrolyte in contact with a portion of the anode feedstock and the cathode, wherein the portion of the anode feedstock and the cathode are disposed in a spaced-apart relationship;
applying an electrical potential between cathode and the portion of the anode feedstock that is disposed in the electrolyte; and
continuously feeding the anode feedstock into the electrolyte.

14. The method of claim 13, wherein the anode feedstock comprises a metallic glass ribbon.

15. A method for uniformly reducing a thickness of a metallic glass ribbon, the method comprising:
providing the metallic glass ribbon as an anode feedstock;
disposing the metallic glass ribbon in an electrolyte bath, wherein the electrolyte bath comprises phosphoric acid;
providing a cathode in a spaced-apart relationship with the metallic glass ribbon; and
applying an electrical potential between the metallic glass ribbon and the cathode to remove at least a part of the two primary constituents from the metallic glass ribbon.
